# EUROPEAN PATENT SPECIFICATION

(11) **EP 0 970 614 B1**
(45) Date of publication and mention of the grant of the patent: **11.06.2003**
(21) Application number: 98830382.2
(22) Date of filing: 24.06.1998
(51) Int. Cl.: A23C 11/02, A23C 21/02, A23C 21/08

(54) **A cereal-based food, particularly for human consumption**
Lebensmittel basierend auf Cerealien, insbesondere für die menschliche Ernährung
Produits alimentaires à base de céréales propre à la consommation humaine

(43) Date of publication of application: 12.01.2000
(73) Proprietor: SRAUM di Ezio Bartocci e C. S.a.s., 29100 Piacenza (IT)
(72) Inventor: Bartocci, Ezio, c/o Sraum Ezio Bartocci & C. S.a.s, 29100 Piacenza (IT); De Luigi,Mario, c/o Sraum Ezio Bartocci & C. S.a.s, 29100 Piacenza (IT)
(74) Representative: Siniscalco, Fabio

(56) References cited:
- WO-A-90/14101
- WO-A-95/03706
- GB-A- 2 092 878
- US-A- 5 112 812
- US-A- 5 328 710
- DATABASE WPI Section Ch, Week 8717 Derwent Publications Ltd., London, GB; Class D13, AN 87-120933 XP002088967 & SU 1 255 091 A (STAVROPOL POLY) , 7 September 1986
- KEIKO SHIRAI ET AL.: "Production of Yoghurt-like Product from Plant Foodstuffs and Whey. Substrate Preparation and Fermentation" JOURNAL OF THE SCIENCE OF FOOD AND AGRICULTURE, vol. 59, no. 2, - 1992 pages 199-204, XP000292149
- QUICK FROZEN FOODS INTERNATIONAL, vol. 23, no. 1, 1981, pages 159-160, XP002088966 & DATABASE FSTA INTERNATIONAL FOOD INFORMATION SERVICE (IFIS), FRANFURT/MAIN, DE AN 83-1-02-p0219,

## Description

The subject of the present invention is a cereal-based food, particularly a "rice milk", prepared particularly for human consumption.

In recent years there has been an increasing need, particularly in western society, for health foods with a low sugar, fat and cholesterol content. Hence, there is an increasing demand for foods of vegetable origin or, at most, containing elements of animal origin which have been treated so as to eliminate the most damaging components (for example, eggs or butter with a lowered cholesterol and/or fat content).

Examples of foods of vegetable origin are soya milk or rice drinks which have a high content of starches and rice sugars but which are not balanced with regard to their nutrient ingredients.

In addition, there is an ever more pressing need to provide a food for large sectors of the world's population which, for environmental or cultural reasons are in precarious nutritional situations.

In order to satisfy the needs set out above, the novel food should fulfil some principal requirements:
- the food should be produced from raw materials which are easily obtainable and which are available in abundance and at low cost, and the food should be produced by methods which are easy to implement, by techniques which are easy to perform;
- the food should be capable of being packaged in accordance with high hygiene criteria so that its organoleptic and nutritional properties can be preserved, even in the long term, avoiding the use of preservatives and low temperatures during storage and transportation, so as to reduce costs and avoid risks of deterioration during distribution in hot climates; in particular the use of preservatives is more and more frequently avoided in order to ensure that the foods are as natural as possible;
- the food should have a taste and an appearance such as to satisfy the most disparate requirements;
- the food should be generally tolerable and assimilable.

Foods based on rice milk are already known, as described, for example in Italian patent application IT 1279533.

The food described in this patent application, which is called "rice milk", comprises a component of vegetable origin and a component of animal origin. However, this food has some disadvantages which limit its wide use as an alternative to cows' milk.

In the first place, this rice milk contains a considerable amount of sugars, particularly simple sugars (monosaccharides) and lactose.

The large quantity of sugars results from the addition of those (glucose and maltose) present in the suitably treated vegetable component to the lactose which is present in considerable quantities in the component of animal origin.

This fact, that is, the presence of lactose in large quantities, constitutes a serious disadvantage of the basic food claimed in patent application IT 127 95 33 because of the recognized inability of an ever increasing number of people (especially infants) to tolerate lactose.

Moreover, characteristics which are generally desirable for a food of this type are, on the one hand, a better consistency and "palatability" and, on the other hand, a sugar content which is not excessive and which, in particular, is achieved without sacrificing the nutritional aspect. In the rice milk described in patent application IT 1279533 the sweet flavour is in fact mainly provided by the simple sugars present in the vegetable component rather than by the complex sugars such as lactose present in the animal component. To achieve this result, the rice is treated in a manner such as to convert most of the starch present therein to simple sugars, but this is at the expense of the nutritional characteristics supplied by the starch. In fact, it is known, according to the most recent progress in dietetics, that it is preferable to consume complex carbohydrates rather than simple sugars.

Keiko Shirai et al., J. of. Sci Food Agric 1992, 59, 199-204, describe the production of a yogurt-like product from plant food stuffs and whey. A mixed substrate composed of soya milk, out flour and dried cheese whey had a content of lactose and protein similar to that of milk used for yogurt manufacture and was fermented with traditional yogurt bacteria.

The problem upon which the present invention is based is that of providing a cereal-based food having a component of animal origin based on milk or milk derivatives which, first of all, is characterized by being generally tolerable, and which, preferably, has organoleptic characteristics - in terms of consistency, "palatability", and flavour - and nutritional characteristics such as to render it pleasing to every sector of the population.

This problem has been solved by the provision of a food comprising a component of vegetable origin produced by partial saccharification of cereals, and a component of animal origin constituted by partially or fully skimmed milk, whey, or buttermilk, characterized in that the lactose content is no greater than 10% by weight, calculated with reference to the total weight of solids, and is preferably no greater than 2% by weight of the total weight of solids and the complex carbohydrates content is no less than 30% by weight, calculated with reference to the total weight of solids.

The food of the present invention is produced by a treatment of milk or milk derivatives, particularly whey and buttermilk, which provides for the total or partial elimination of the lactose present therein. The total or partial elimination of lactose prevents risks of intolerance to the product. In addition, in the method of the present invention, the lactose is hydrolysed to give simple sugars (glucose and galactose) which contribute substantially to providing the food with a sweet taste. This characteristic enables the conversion of the rice to be regulated, if desired, to a stage in which a large quantity of starch is still present, which leads to an advantage at the nutritional and organoleptic level (a better consistency of the food).

The food of the present invention therefore comprises a component of vegetable origin produced by partial saccharification of cereals, and a component of animal origin constituted by partially or fully skimmed milk, whey or buttermilk, characterized in that the lactose content is no greater than 10% by weight and the complex carbohydrates content is no less than 30% by weight, calculated with reference to the total weight of solids.

Moreover, in a particularly preferred embodiment of the present invention the component of animal origin is also subjected to a treatment to enrich its protein content. A higher protein content leads, on the one hand, to a further improvement in the organoleptic properties of the product (an improvement in the palatability and consistency of the product) and, on the other hand, to a greater nutritional content. According to this particularly preferred aspect of the invention, the food will therefore have a protein content no less than 10% by weight, calculated with reference to the total weight of solids.

The food of the present invention is also characterized by a low fat content. The salt component (particularly calcium and phosphorus) certainly constitutes a factor of nutritional and biological importance. The presence of more proteins also increases the biological availability of calcium, affording a further advantage in nutritional terms.

In order to implement the present invention, the component of animal origin, which is based on milk or milk derivatives, is subjected to a process characterized in that it comprises a step for the enzymatic hydrolysis of the lactose with β-galactosidase and, possibly, a step for protein-enrichment by means of ultrafiltration, as will be described below.

With regard to the component of vegetable origin, any cereals may be used (wheat, maize, etc.). However, the cereals preferably used in the present invention are those having a high starch content, particularly, barley, oats, maize and rice and, even more preferably, rice, which is a cereal cultivated throughout the world and obtainable at low cost. The following description in connection with the treatment of rice may, however, be applied to the other cereals included in the present invention by applying to the methods suitable modifications which take account of the different composition of the cereal in question. These modified methods are in any case generally within the capabilities of experts in the art.

The rice-based vegetable component is present in a proportion which varies between 20 and 90% by weight of the total solids, preferably between 50 and 80% by weight of the total solids.

In order to prepare the food according to the present invention, the rice, in the form of an aqueous suspension/solution, is treated with enzymes and partially saccharified, so as to convert the starch partially to dextrin, maltose and/or glucose. This step eliminates the typical rice flavour and produces a pleasant, sweet and digestible product.

In the aqueous converted rice suspension/solution, the maltose content and the glucose content, taken individually, are between 0% and 70% by weight of the starch initially present. The sum of the glucose and maltose contents is in any case generally between 5 and 70% by weight of the starch initially present, preferably between 5 and 45% by weight of the starch initially present.

By way of example, the following two methods may be followed for the conversion of the rice with enzymes and partial saccharification.

### Method 1

An aqueous suspension/solution of rice is prepared with a proportion of rice variable between 0.3 and 0.4 kg per kg of water. White, semi-processed, or whole-grain rice, or a mixture thereof may be used. Whole-grain rice is preferred since it contains a larger amount of vitamins, proteins and mineral salts.

The rice is first broken up or partially ground, for example to particles of 20-30 mesh, to facilitate dissolving thereof.

The enzyme α-amylase (having an enzymatic activity of about 7500 RAU/g) is added to the aqueous rice suspension/solution, preferably with stirring, in a proportion variable between 50 grams and 250 grams for each 100 kg of rice. The enzymatic reaction is carried out by gradually raising the temperature to about 80°C and maintaining this temperature for a period variable between 30 minutes and 60 minutes. The temperature is then raised to about 100°C and heating is maintained for approximately a further 15 minutes.

The mixture is then cooled to about 60°C and supplemented with from 100 to 300 ml of Barley β-amylase (having an enzymatic activity of about 4500 FAU/g) and/or with from 50. to 300 ml of glucoamylase (having an enzymatic activity of about 15000 AGI/g) for each 100 kg of rice. Preferably, small quantities of Barley β-amylase and/or of glucoamylase are used so as to maintain a low degree of conversion of the starch into simple sugars. For the same reason, the temperature of about 60°C is maintained for 1-3 hours, preferably for 1 hour. The degree of conversion of the starch into maltose and glucose is in fact directly proportional to the reaction time and to the enzyme dose.

The rice mixture thus obtained is filtered, centrifuged and possibly dried as described below and is then ready for use, to be mixed with the other component of animal origin. If used in liquid form, it is preferably diluted with water, before being mixed with the component of animal origin, to give a solids content which may vary between 9 and 25% by weight, according to requirements.

### Method 2

The rice suspension/solution converted with enzymes and partially saccharified, can also be produced by the conventional Japanese method for producing the product known by the name of amasake, a more or less dense liquid made from rice; this method provides for cooking, preferably steaming, of the rice (whole-grain , semi-processed or white rice, or a mixture thereof) to which rice, pre-cooked and inoculated as described below and known as koji rice, is added to start the enzymatic process.

The koji rice is prepared by inoculating steamed white rice with spores of a mould *Aspergillus oryzae*, and growing it so as to obtain rice containing a group of enzymes with a predominance of α-amylase which dextrinize or dissolve and saccharify the starch.

After culture, which may take place for a period variable between 4 and 48 hours, the mass of rice treated is filtered and diluted to give the desired solids concentration. The rice is then ready for use to be combined with the component of animal origin.

This second method requires a longer period of time depending on the development of *Aspergillus oryzae* and on the consequent action of the amylolytic enzymes liberated. In this method also, short reaction times enable a final product with a larger percentage of complex carbohydrates to be produced.

Whereas Method 1 is suitable for industrial uses which can be standardized, Method 2 may be preferable for particular preparations directed towards consumers who prefer natural production processes as well as natural constituents.

The component of animal origin is preferably constituted by whey or buttermilk. Alternatively, fully or partially skimmed milk may also be used.

The whey, which is the residue of the processing of milk to form cheese, is available at low cost and still has considerable nutritional properties. In particular, whey is almost completely free of fats (0.05-0.2% by weight) and casein, whereas it still retains proteins such as albumin and globulin which are very useful nutritionally - in quantities variable between 0.4 and 0.7% by weight - and vitamins such as vitamin B2 and B12. Moreover, whey is rich in mineral salts, containing up to 0.7% by weight, and in essential amino-acids. Whey also contains a quantity of 4.5-5% by weight of lactose.

Whey has a solids content of about 6% by weight. Alternatively, the whey may be dried and reduced to powder ready to be diluted at the time of use. Whey is normally sold in this form.

The drying step can be performed with the use of the drying system known as "spray" drying which provides for the injection of the liquid by means of a nozzle into a chamber with a very hot air-flow, enabling the proteins to be denatured to a reduced extent and a non-hygroscopic product to be produced. Whey dried in this manner has, on average, the following percentage composition by weight: lactose 71%, mineral salts 15.2%, proteins 11%, moisture 2%, and fats 0.8%.

Buttermilk, which is the residue of the processing of cream to give butter, is a low-cost product but has better nutritional properties than whey since it has a solids content of 9-10% by weight.

In comparison with whey, buttermilk has a greater content of higher proteins (3.5-3.8% by weight), vitamins such as vitamins B2, B6, E, niacin, mineral salts, and phospholipids, whereas its lactose content is almost the same. The total percentage of fats does not exceed 0.6%.

Buttermilk can also be used in the liquid state or dried and, like whey, is mostly sold in this form because it is convenient to use and to keep and has a high degree of solubility.

Partially or fully skimmed milk is the residue of the separation of the cream from whole milk by centrifuging. Skimmed milk has practically the same content as whole milk except for the percentage of fats which, in the case of fully skimmed milk, is no greater than 0.3% by weight.

According to the present invention, the milk derivative (whey, buttermilk, or partially or fully skimmed and pasteurized milk) is treated with β-galactosidase at a temperature of about 10°C so as to eliminate or reduce the lactose to the desired percentage by hydrolysis (Step A). In general, 2000 NLU (nitrogen lactose units) of β-galactosidase is used for every litre of milk derivative and the enzymatic reaction is continued for a period of at least 8-10 hours.

The milk derivative thus obtained contains from 6 to 8% by weight of solids, constituted predominantly by glucose, galactose, mineral salts, sero-proteins and some fats, with a lactose content no greater than 12.5% by weight, with reference to the weight of solids.

The milk derivative thus treated is preferably concentrated by ultrafiltration to increase its protein content (step B). The concentration by ultrafiltration step B is a process widely known *per se* which consists of passing the liquid to be concentrated (in the present case, the milk derivative) through several membranes having a larger molecule cut-off value such as to retain the proteins. The liquid is urged longitudinally through the membranes under pressure in a manner such that some of the solution is expelled radially by transudation through the cylindrical walls of the membranes. The desired concentration can be achieved by passing the liquid through the membranes several times or by putting several membranes in parallel.

During the ultrafiltration process, the temperature is preferably kept below 50-60°C in order not to denature the substances contained.

The milk or milk derivative may be subjected purely to Step A, purely to Step B, or to a combination of the two treatments (Step A + B). In the latter case, the milk or milk derivative may equally well be subjected to Step A first or to Step B first.

The mixing of the milk derivative thus prepared and the rice suspension/solution produced in accordance with Method 1 or 2, produces a mixture in which the lactose content is no greater than 10% and the complex carbohydrate content is preferably no less than 30% by weight with reference to the total weight of solids. In an even more preferred food according to the present invention the protein content is no less than 10% by weight with reference to the total weight of solids.

The percentage by weight of solids relative to the total weight of the food, when the latter is used as a drink, is preferably between 10 and 18%. After suitable homogenization at 150-200 bars and pasteurization or UHT treatment for long-term preservation, a drink with organoleptic characteristics similar to those of milk is produced.

The food produced as described above can also be used for the preparation of puddings, ices or yoghurt-type products, as will be described in the examples. In this case, however, it will preferably have a percentage by weight of solids of between of 20 and 35%, relative to the total weight of the food.

Alternatively, the milk derivative produced by the treatment of whey, buttermilk, or partially or fully skimmed milk by Steps A, B or A + B may be dried and reduced to powder for dilution at the time of use.

As well as being produced ready for use as described above, the rice milk of the present invention may therefore also be prepared in dried form for dilution in water at the time of use. An advantageous method of drying is the "spray"-drying method described above. The vegetable component and the animal component, suitably treated and dried with the use of this technique, can be packaged separately to be mixed and diluted at the time of use, or may be premixed and put in a single package.

It should also be noted that both whey in dried form, having a protein content suitably concentrated by ultrafiltration and possibly having been delactosed, and the individual components such as glucose, maltose, starch, dextrin, etc., are available on the market. The food of the present invention may therefore also be made up directly by mixing these components and diluting them in water as described below in the examples.

The percentage composition of the starch according to the present invention can be determined in the following manner:
- glucose, starch, maltose, galactose and lactose can be determined by enzymatic analysis (Boehringer Mannheim kit, Enzymatic Analysis booklet);
- the fatty substances are determined by extraction;
- the proteins are determined in accordance with Kjieldhal's method;
- the total quantity of solids is determined by drying in an oven.

These methods are widely known to experts in the art and it is therefore not necessary to describe them in detail.

For further clarification of the present invention and its possible uses, some examples of preparations are given below.

### Preparation 1 - rice suspension/solution

a) 0.3-0.4 kg of rice was ground to give a particle size of 20-30 mesh and was then suspended in one litre of water with stirring. 0.45 g of α-amylase (enzymatic activity about 7500 RAU/g) was added to this mixture and the temperature was gradually increased to 80°C. After 30 minutes, the temperature was further increased to 100°C. After 15 minutes at this temperature, the mixture was cooled to 60°C and 0.6 ml of Barley β-amylase (enzymatic activity about 4500 FAU/g) and 0.15 ml of glucoamylase (enzymatic activity about 15000 AGI/g) were added. The temperature of 60°C was maintained for about 1 hour and the rice mixture was then filtered, centrifuged and diluted with water to give a mixture with a solids residue of 19-20% by weight.
A rice suspension/solution was produced, in which the relative percentages by weight of the individual components, calculated with reference to the weight of solids, was as follows:

| | |
|---|---|
| proteins | 1.4% |
| fats | 0.7% |
| mineral salts | 0.7% |
| glucose | 5% |
| maltose | 15% |
| starch | 77.2% |

b) By repeating the method described in point a) but omitting the addition of the Barley β-amylase, a rice suspension/solution was produced, in which the relative percentages by weight of the individual components, calculated with reference to the weight of solids, was as follows:

| | |
|---|---|
| proteins | 1.4% |
| fats | 0.7% |
| mineral salts | 0.7% |
| glucose | 10% |
| starch | 87.2% |

### Preparation 2 - whey derivative

### a) - Step A -

One litre of whey was cooled to a temperature of 10°C and 2000 NLU of β-galactosidase was then added. The enzymatic reaction was carried out for a period of about 10 hours.

A whey derivative having the following percentage composition by weight calculated with reference to the weight of solids was obtained:

| | |
|---|---|
| glucose | 35% |
| galactose | 35% |
| mineral salts | 15% |
| proteins | 10% |
| fats | 1% |
| lactose | 4% |

### b) - Step A + B -

The subjection of the whey derivative obtained in point a) to a process of concentration by ultrafiltration such as that described above produced a mixture having the following percentage composition by weight, calculated with reference to the weight of solids:

| | |
|---|---|
| glucose | 25% |
| galactose | 25% |
| mineral salts | 13% |
| proteins | 33% |
| fats | 1.5% |
| lactose | 2.5% |

### Example 1 - "rice milk" food drink

a) One litre of rice suspension/solution prepared in accordance with Preparation 1a) was diluted, with an equal quantity of the whey derivative prepared in accordance with Preparation 2a), so as to obtain a mixture having a quantity of solids of 13.5% by weight and having the following percentage composition by weight, calculated with reference to the weight of solids:

| | |
|---|---|
| proteins | 3.3% |
| lactose | 1% |
| galactose | 7.7% |
| glucose | 11.6% |
| maltose | 11.6% |
| starch | 60% |
| mineral salts | 3.8% |
| fats | 0.76% |
| fibre | 0.24% |

The mixture was then homogenized at 150-200 bars, producing a drink which had organoleptic characteristics similar to those of milk but which, in addition to the properties of similar products based solely on rice, also had some characteristics present in animal milk (mineral salts, proteins with high biological value and essential amino-acids) and was also generally tolerable by virtue of the almost total absence of lactose.
b) 5 kg of dehydrated whey powder enriched by ultrafiltration to give a protein content of 30% by weight (a product which is also available commercially) was added to 100 litres of rice suspension/solution produced in accordance with Preparation 1b) and diluted with water to give a solids content of 9% by weight.
A mixture with a solids content of 13.01% by weight and having the following percentage composition by weight calculated with reference to the weight of solids, was obtained:

| | |
|---|---|
| proteins | 14.1% |
| lactose | 20% |
| glucose | 3.8% |
| starch | 55% |
| mineral salts | 5.8% |
| fats | 1.3% |

c) 2 kg of dehydrated whey powder enriched by ultrafiltration to give a protein content of 80% by weight and delactosed again by ultrafiltration or as described in Preparation 2b) (a product which is also available commercially) was added to 100 litres of rice suspension/solution produced in accordance with Preparation 1(a) and diluted with water to give a solids content of 11% by weight.
A mixture with a solids content of 13% by weight and having the following percentage composition by weight, calculated with reference to the weight of solids was obtained:

| | |
|---|---|
| proteins | 13.4% |
| lactose | 1.7% |
| glucose | 4.2% |
| maltose | 12.7% |
| starch | 65.3% |
| mineral salts | 1.1% |
| fats | 1.6% |

d) the "rice milk" drink according to the present invention may also be made up by mixing in suitable proportions and diluting the individual components, which are normally available on the market. For example, 5 kg of dehydrated whey powder enriched by ultrafiltration to give a protein content of 30% by weight and delactosed, 1.5 kg of maltose and 8.1 kg of starch were mixed and diluted in 100 litres of water to give a "rice milk" with a percentage of solids of 14.6% by weight and having the following percentage composition by weight, calculated with reference to the total weight of solids:

| | |
|---|---|
| proteins | 11.4% |
| lactose | 2% |
| galactose | 7.9% |
| glucose | 7.9% |
| maltose | 10.3% |
| starch | 55.5% |
| mineral salts | 4.5% |
| fats | 0.5% |

### Example 2 - pudding made from the "rice milk" food drink

A litre of rice milk produced as described in Example 1a), b), c) or d) but having a solids content of between 20 and 35% by weight was used instead of cows' milk for the preparation of a pudding. About 15 grams of sodium alginate was added to the rice milk, slowly and with constant stirring, after which the preparation was kept at rest for 30-60 minutes. A well-tolerated pudding characterized by a low fat content was produced and did not require the addition of sugars.

Cocoa powder may be added to the above-mentioned mixture to produce a chocolate flavour, or other ingredients such an vanilla, carob, marzipan or almond milk, or other flavourings commonly used in food preparations may be added.

### Example 3 - Yoghurt-type food made from "rice milk" food drink

One litre of rice milk produced as described in Example 1a), b), c) or d) but having a solids content of between 20 and 25% by weight was used instead of cows' milk to prepare a yoghurt with the use either of the full coagulation system or of the homogenized system. The rice milk was inoculated with the ferments usually used (Lactobacillus bulgaricus and Streptococcus termophilus), and then incubated at 42-45°C until the desired acidity (normally pH 4) was reached. Upon completion, the yoghurt was cooled and kept at about 4°C.

In order to produce a rice milk containing the necessary solids content to prepare a yoghurt with good organoleptic characteristics, the initial mixture may be supplemented with food fibre.

During preparation, fruit or other ingredients or flavourings conventionally used in food preparations may also be added.

### Example 4 - Rice milk powder

The rice suspension/solution produced in accordance with Preparation 1a) or 1b) was dried by the drying system known as "spray" drying, described above with reference to whey.

A white powder was produced and could be mixed with an equal, smaller or larger quantity of powder of the milk derivative produced in accordance with Preparation 2a) or 2b), in turn produced by the "spray" drying system, or with dehydrated whey powder with an enriched protein content (commercial product).

The relative proportions of the vegetable and animal components will depend upon the type of nutritional profile to be given to the product.

The powder thus produced was easily dispersed in water and, as a powder, was easy to preserve.

### Example 5 - Instant, chocolate-flavoured rice milk mixture

25% by weight of cocoa powder and 1% by weight of salt was added to a mixture of rice milk powder produced in accordance with Example 4.

An instant mixture which could be diluted in 7-8 parts of boiling water without the addition of sugars, and which was naturally rich in carbohydrates, was obtained.

Instead of cocoa, different flavourings such as those used for the pudding of Example 2, or fruit flavourings may be used.

### Example 6 - Refreshing drink

A litre of "rice milk" drink produced in accordance with Example 1a), b), c) or d) was flavoured by the addition of 25-75 ml of peppermint syrup and the solution was mixed.

Naturally, the peppermint syrup may be replaced by syrups of other types such as those normally on the market or by dried or fresh fruit pulp or homogenates.

### Example 7 - Frozen dessert made from "rice milk" food

A litre of "rice milk" produced in accordance with Example 1a), b), c) or d) but having a solids content of between 25 and 35% by weight was used instead of cow's milk for the preparation of a frozen dessert. The food was supplemented with salt, stabilizers (for example carrageenin, carob flour, agar agar, pectin, etc.) and flavourings (for example vanilla flavouring).

The mixture thus obtained was pasteurized at high temperature (82°C) for a short period or at low temperature (65°C) for 30 minutes and was then homogenized at 150-200 bars and cooled rapidly to below 5°C.

The frozen dessert thus obtained had a large amount of incorporated air due to the low content of sugars and fats which rendered the structure of the ice cream light and finely structured (very fine ice crystals).

## Claims

1. A food comprising a cereal-based component of vegetable origin and a component of animal origin based on milk or whey, buttermilk, partially or fully slimmed milk, **characterized in that** the lactose content is no greater than 10% by weight, calculated with reference to the total weight of solids, and the complex carbohydrates content is no less than 30% by weight, calculated with reference to the total weight of solids.

2. A food according to Claim 1, in which the lactose content is no greater than 2% by weight, calculated with reference to the total weight of solids.

3. A food according to Claim 1 or Claim 2, in which the cereal is selected from the group comprising barley, oats, maize and rice.

4. A food according to Claim 3, in which the cereal is rice.

5. A food according to Claims 1 to 4, in which the proteins content is no less than 10% by weight, calculated with reference to the total weight of solids.

6. A food according to Claims 4 or 5, in which the rice-based vegetable component is present in a proportion which varies between 20 and 90% by weight, calculated with reference to the total weight of solids.

7. A food according to Claim 6, in which the rice-based vegetable component is present in a proportion which varies between 50 and 80% by weight, calculated with reference to the total weight of solids.

8. A food according to Claims 1 to 7, in which the rice-based vegetable component and the animal component based on milk or whey, buttermilk, partially or fully skimmed milk are in dried form.

9. A food according to Claims 1 to 8, in which the component of animal origin is produced from whey or buttermilk.

10. Use of the food product according to claims 1-9 as a food drink in which the solids content preferably is between 10-18% by weight relative to the total weight of the food.

11. Use of the food according to claim 10 wherein the drink additionally comprises a flavouring.

12. use of the food according to claims 1-9 for the preparation of puddings, ice or yoghurt-type products in which the solids content preferably is between 20-35% by weight relative to the total weight of the food.

13. Use of the food according to claim 8 for the preparation of an instant mixture additionally comprising flavourings.

14. A method of preparing the food according to Claims 1 to 9, comprising the steps of:
i) treating with enzymes and partially saccharifying an aqueous rice suspension/solution to give a content of glucose and maltose between 5 and 70%, with reference to the weight of the starch initially present.
ii) treating milk or whey, buttermilk, partially or fully skimmed milk with β-galactosidase,
iii) mixing the rice suspension/solution treated in accordance with step i) with the milk or whey, buttermilk, partially or fully skimmed milk treated in accordance with step ii) in suitable proportions.

15. A method according to Claim 14, for the preparation of the food according to Claim 5, in which the milk or the milk derivative is also subjected to a concentration by ultrafiltration treatment.

16. A method for the preparation of the food according to Claims 1 to 5, comprising the step of mixing and diluting the component of animal origin in dried form with the remaining individual components obtained in dried form.

## Patentansprüche

1. Nahrungsmittel, umfassend eine Komponente pflanzlicher Herkunft auf Getreidebasis und eine Komponente tierischer Herkunft auf der Basis von Milch oder Molke, Buttermilch, teilweise oder vollständig entrahmter Milch, **dadurch gekennzeichnet, dass** der Lactosegehalt nicht mehr als 10 Gew.-% beträgt, berechnet bezogen auf das Gesamtgewicht der Trockensubstanz, und der Gehalt an komplexen Kohlenhydraten nicht weniger als 30 Gew.-% beträgt, berechnet bezogen auf das Gesamtgewicht der Trockensubstanz.

2. Nahrungsmittel nach Anspruch 1, in welchem der Lactosegehalt nicht mehr als 2 Gew.-% beträgt, berechnet bezogen auf das Gesamtgewicht der Trockensubstanz.

3. Nahrungsmittel nach Anspruch 1 oder Anspruch 2, in welchem das Getreide ausgewählt ist aus der Gruppe umfassend Gerste, Hafer, Mais und Reis.

4. Nahrungsmittel nach Anspruch 3, in welchem das Getreide Reis ist.

5. Nahrungsmittel nach den Ansprüchen 1 bis 4, in welchem der Proteingehalt nicht weniger als 10 Gew.-% beträgt, berechnet bezogen auf das Gesamtgewicht der Trockensubstanz.

6. Nahrungsmittel nach den Ansprüchen 4 oder 5, in welchem die pflanzliche Komponente auf Reisbasis in einem Anteil vorhanden ist, der zwischen 20 und 90 Gew.-% schwankt, berechnet bezogen auf das Gesamtgewicht der Trockensubstanz.

7. Nahrungsmittel nach Anspruch 6, in welchem die pflanzliche Komponente auf Reisbasis in einem Anteil vorhanden ist, welcher zwischen 50 und 80 Gew.-% schwankt, berechnet bezogen auf das Gesamtgewicht der Trockensubstanz.

8. Nahrungsmittel nach den Ansprüchen 1 bis 7, in welchem die pflanzliche Komponente auf Reisbasis und die tierische Komponente auf der Basis von Milch oder Molke, Buttermilch, teilweise oder vollständig entrahmter Milch in getrockneter Form vorliegen.

9. Nahrungsmittel nach den Ansprüchen 1 bis 8, in welchem die Komponente tierischer Herkunft aus Molke oder Buttermilch hergestellt ist.

10. Verwendung des Nahrungsmittelprodukts nach den Ansprüchen 1-9 als Nahrungsmittelgetränk, in welchem der Trockensubstanzgehalt vorzugsweise zwischen 10-18 Gew.-%, bezogen auf das Gesamtgewicht des Nahrungsmittels, liegt.

11. Verwendung des Nahrungsmittels nach Anspruch 10, wobei das Getränk zusätzlich einen Aromastoff umfasst.

12. Verwendung des Nahrungsmittels nach den Ansprüchen 1-9 für die Herstellung von Pudding, Eis oder joghurtartigen Produkten, in welchen der Trockensubstanzgehalt vorzugsweise zwischen 20-35 Gew.-%, bezogen auf das Gesamtgewicht des Nahrungsmittels, liegt.

13. Verwendung des Nahrungsmittels nach Anspruch 8 für die Herstellung einer Instantmischung, die zusätzlich Aromastoffe umfasst.

14. Verfahren zum Herstellen des Nahrungsmittels nach den Ansprüchen 1 bis 9, umfassend die Schritte:
i) Behandeln mit Enzymen und teilweises Verzuckern einer wässrigen Reis-Suspension/Lösung, um einen Gehalt an Glucose und Maltose zwischen 5 und 70 %, bezogen auf das Gewicht der ursprünglich vorhandenen Stärke, zu erhalten.
ii) Behandeln von Milch oder Molke, Buttermilch, teilweise oder vollständig entrahmter Milch mit β-Galactosidase,
iii) Vermischen der gemäß Schritt i) behandelten Reis-Suspension/Lösung mit der gemäß Schritt ii) behandelten Milch oder Molke, Buttermilch, teilweise oder vollständig entrahmten Milch in geeigneten Verhältnissen.

15. Verfahren nach Anspruch 14 für die Herstellung des Nahrungsmittels nach Anspruch 5, in welchem die Milch oder das Milchderivat auch einer Konzentration durch Ultrafiltrationsbehandlung unterworfen wird.

16. Verfahren für die Herstellung des Nahrungsmittels nach den Ansprüchen 1 bis 5, umfassend den Schritt des Vermischens und Verdünnens der Komponente tierischer Herkunft in getrockneter Form mit den übrigen einzelnen Komponenten, die in getrockneter Form erhalten werden.

## Revendications

1. Produit alimentaire comprenant un élément constituant à base de céréale d'origine végétale, et un élément constituant d'origine animale, basé sur du lait ou du petit lait, du babeurre, du lait partiellement ou complètement écrémé, **caractérisé en ce que** la teneur en lactose n'est pas supérieure à 10 % en poids, calculée en se référant au poids total des solides, et **en ce que** la teneur en hydrates de carbone complexes n'est pas inférieure à 30 % en poids, calculée en se référant au poids total des solides.

2. Produit alimentaire selon la revendication 1, dans lequel la teneur en lactose n'est pas supérieure à 2 % en poids, calculée en se référant au poids total des solides.

3. Produit alimentaire selon la revendication 1 ou la revendication 2, dans lequel la céréale est choisie à partir du groupe comprenant l'orge, l'avoine, le maïs et le riz.

4. Produit alimentaire selon la revendication 3, dans lequel la céréale est le riz.

5. Produit alimentaire selon les revendications 1 à 4, dans lequel la teneur en protéines n'est pas inférieure à 10 % en poids, calculée en se référant au poids total des solides.

6. Produit alimentaire selon la revendication 4 ou 5, dans lequel l'élément constituant végétal à base de riz est présent en une proportion qui varie entre 20 et 90 % en poids, calculée en se référant au poids total des solides.

7. Produit alimentaire selon la revendication 6, dans lequel l'élément constituant végétal à base de riz est présent en une proportion qui varie entre 50 et 80 % en poids, calculée en se référant au poids total des solides.

8. Produit alimentaire selon les revendications 1 à 7, dans lequel l'élément constituant végétal à base de riz et l'élément constituant d'origine animale, basé sur du lait ou du petit lait, du babeurre, du lait partiellement ou complètement écrémé, se présentent sous une forme déshydratée.

9. Produit alimentaire selon les revendications 1 à 8, dans lequel l'élément constituant d'origine animale est produit à partir de petit lait ou de babeurre.

10. Utilisation du produit alimentaire selon les revendications 1 à 9 en tant qu'aliment à boire, dans lequel la teneur en solides est, de préférence, comprise dans la fourchette de 10 à 18 % en poids par rapport au poids total du produit alimentaire.

11. Utilisation du produit alimentaire selon la revendication 10, dans lequel la boisson comprend en outre un arôme.

12. Utilisation du produit alimentaire selon les revendications 1 à 9 pour la préparation de puddings, de produits du type glace ou yaourt, dans lesquels la teneur en solides est, de préférence, comprise dans la fourchette de 20 à 35 % en poids par rapport au poids total du produit alimentaire.

13. Utilisation du produit alimentaire selon la revendication 8 pour la préparation d'un mélange instantané, comprenant en outre des arômes.

14. Procédé de préparation du produit alimentaire selon les revendications 1 à 9, comprenant les étapes de :
i) traitement, par des enzymes, et saccharification partielle d'une suspension / solution aqueuse de riz pour obtenir une teneur en glucose et en maltose comprise dans la fourchette de 5 à 70 %, par rapport au poids de l'amidon initialement présent ;
ii) traitement, par la β-galactosidase, du lait ou du petit lait, du babeurre, du lait partiellement ou complètement écrémé ;
iii) mélange, dans des proportions adéquates, de la suspension / solution de riz, traitée selon l'étape i), avec le lait ou le petit lait, le babeurre, le lait partiellement ou complètement écrémé, traité selon l'étape ii).

15. Procédé selon la revendication 14, pour la préparation du produit alimentaire selon la revendication 5, dans lequel le lait ou le dérivé du lait est également soumis à une concentration par un traitement d'ultrafiltration.

16. Procédé pour la préparation du produit alimentaire selon les revendications 1 à 5, comprenant l'étape de mélange et de dilution de l'élément constituant d'origine animale, sous une forme déshydratée, avec les éléments constituants individuels restants, obtenus sous forme déshydratée.
